(19) **Europäisches Patentamt**

**European Patent Office**

**Office européen des brevets**

(11) **EP 1 563 143 B1**

(12) **FASCICULE DE BREVET EUROPEEN**

(45) Date de publication et mention
de la délivrance du brevet:
**01.03.2006 Bulletin 2006/09**

(21) Numéro de dépôt: **03786038.4**

(22) Date de dépôt: **20.11.2003**

(51) Int Cl.:
***E01C 19/10*** *(2006.01)*

(86) Numéro de dépôt international:
**PCT/FR2003/003439**

(87) Numéro de publication internationale:
**WO 2004/048701 (10.06.2004 Gazette 2004/24)**

(54) **Procédé de fabrication, notamment à froid, d'un enrobé, et enrobé obtenu par la mise en oeuvre de ce procédé**

Verfahren zur Aufbereitung, insbesondere Kaltaufbereitung, eines Mischgutes und ein solches Mischgut

Method for producing a bituminous mix, in particular by cold process, and bituminous mix obtained by said method

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **21.11.2002 FR 0214603**

(43) Date de publication de la demande:
**17.08.2005 Bulletin 2005/33**

(73) Titulaire: **Demeter Technologies**
**31081 Toulouse Cedex (FR)**

(72) Inventeur: **RAYNAUD, Gilbert**
**F-31600 Muret (FR)**

(74) Mandataire: **Cabinet BARRE LAFORGUE & associés**
**95, rue des Amidonniers**
**31000 Toulouse (FR)**

(56) Documents cités:
**FR-A- 2 352 763          FR-A- 2 623 219**
**FR-A- 2 705 662**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un procédé de fabrication d'un matériau routier granulaire enrobé, pour couche de roulement, de base ou de fondation, ainsi que le matériau routier obtenu par la mise en oeuvre de ce procédé. Elle concerne plus particulièrement un procédé de fabrication à froid d'un matériau, dit enrobé, comprenant à la fois un liant organique et un liant minéral.

Chaque couche d'une chaussée est constituée principalement de granulats, dont le rôle est de former un squelette solide résistant aux sollicitations du trafic, et d'au moins un liant assurant la cohésion de ce squelette, dont le choix détermine les caractéristiques de la couche.

La difficulté du choix du liant et des granulats provient de ce que cohabitent, dans chaque couche d'une chaussée, des exigences complémentaires et antagonistes relatives respectivement à la rigidité et à la flexibilité de la couche, indispensables pour obtenir une réalisation durable : dans le cas d'une couche de roulement, résistance à l'orniérage et au fluage, mais aussi souplesse, confort des usagers, adhérence des véhicules, résistance au désenrobage et au plumage ; dans le cas d'une couche de structure (couche de fondation ou de base), portance, résistance à la traction, mais aussi capacité de déformation ; dans tous les cas, résistance à la fatigue et à la fissuration, compacité, cohésion, homogénéité, durabilité, étanchéité, maniabilité du matériau au cours des opérations de préparation et de manutention (malaxage, transport, épandage, compactage...).

On connaît, premièrement, les matériaux routiers, dits enrobés, à base de liant(s) hydrocarboné(s). De tels enrobés hydrocarbonés présentent l'avantage d'avoir une capacité de déformation relativement élevée, et par conséquent une grande résistance à la fissuration, au détriment de leur rigidité. Deux techniques principales existent pour leur réalisation : la technique des enrobés hydrocarbonés à chaud et celle des enrobés hydrocarbonés à froid.

Les techniques à chaud, et notamment les techniques d'enrobage à chaud au bitume pur, sont parfaitement maîtrisées et permettent d'obtenir des mélanges stables, présentant de bonnes caractéristiques mécaniques et d'autres qualités telles que : adhésivité du bitume, étanchéité, souplesse, confort et adhérence (texture) de l'enrobé. Une telle performance est cependant obtenue au prix d'une forte consommation d'énergie et d'une mise en oeuvre très contraignante (complexité des matériels utilisés et des modes opératoires mis en oeuvre), et au détriment de l'environnement (risque important de pollution de l'eau, de l'air...) et de la sécurité des personnes impliquées dans la fabrication et l'épandage de ces enrobés (température élevée -de 140°C à 170°C- des matériaux, fumées, dosage en bitume important...). Elle repose de plus sur des fragilités : relative sensibilité des chaussées obtenues aux sollicitations du trafic (phénomènes de ressuage, de plumage, d'orniérage et de fluage), qui conduit à rechercher une plus grande sophistication des bitumes (modifiés par des polymères), des additifs et des granulats, au détriment de l'économie ; disponibilité décroissante (et donc coût croissant) de la ressource ; vieillissement du bitume.

Les techniques à froid ont pendant longtemps consisté à enrober des granulats à l'aide de liants anhydres très fluides, souvent à base de bitume fluidifié ou de goudron et d'huiles issues de la distillation des brais de houilles. Plus récemment, ces liants anhydres ont été remplacés par des émulsions de bitume (phase aqueuse continue constituée essentiellement d'eau et d'agent émulsifiant, dans laquelle sont dispersées de fines particules d'une phase hydrocarbonée constituée par du bitume pur ou fluxé ou fluidifié notamment à l'aide de solvants pétroliers). Antérieures aux techniques à chaud mais rapidement supplantées par celles-ci, les techniques à froid souffrent de plusieurs inconvénients : faible tenue de l'enrobé au jeune âge, du fait d'une évacuation aléatoire de l'eau excédentaire et/ou d'une évaporation lente des solvants ou fluidifiants (souvent aromatiques) utilisés ; caractéristiques mécaniques insuffisantes pour des routes d'important trafic ; résultats peu homogènes. Pour ces raisons, l'utilisation des techniques à froid est aujourd'hui limitée aux petites réparations d'urgence (trous, nids de poule, bouchage provisoire des tranchées...) et aux chaussées de faible trafic. Peu utilisées, ces techniques sont mal maîtrisées. Elles présentent pourtant de nombreux avantages, notamment lorsqu'elles utilisent une émulsion de bitume : simplicité de mise en oeuvre, souplesse d'utilisation, maniabilité à température ambiante et rusticité de l'enrobé, coût réduit, respect de l'environnement.

Une volonté de remettre les techniques à froid au goût du jour est née récemment d'un souci croissant de protection de l'environnement. Et des procédés ont été proposés pour tenter de pallier certains des inconvénients de ces techniques. Ainsi, FR 2.623.219 vise à résoudre les problèmes de stockage des enrobés bitumineux en proposant un procédé consistant à enrober préalablement des éléments fins 0/2 ou 0/4 avec une émulsion cationique de bitume mou (très faible viscosité) à rupture lente, en vue d'obtenir un matériau intermédiaire pouvant être stocké destiné à être mélangé ultérieurement à des granulats 2/D ou 4/D en cours ou en fin d'enrobage par une émulsion cationique de bitume dur (grande viscosité) fluxé ou fluidifié, le matériau final obtenu pouvant également être stocké. En vu de réduire les coûts de production, EP 781.887 propose de simplifier le procédé précédent, et notamment de supprimer l'étape de mûrissement ou de stockage du matériau intermédiaire, en introduisant les gros éléments 2/D dans un malaxeur avec une première émulsion à rupture moyenne d'un bitume pur de grade 25/35 (bitume dur) à 180/220 ou d'un bitume fluidifié, puis en y ajoutant les éléments fins 0/2 à 0/6 puis une seconde émulsion stabilisée (rupture lente) de faible viscosité obtenue par mélange de la première émulsion avec un agent cationique aqueux. Par ailleurs, en vue d'améliorer la rigidité des enrobés bitumineux, US 5.582.639 vise à permettre l'utilisation d'une émulsion d'un bitume dur -dont la rupture doit intervenir avant transport et épandage de l'enrobé en vue d'éviter les problèmes de "lavage" de l'enrobé-, tout en conservant la maniabilité des enrobés à émulsion de bitume mou (qui ne peut être utilisée que pour des chaussées de faible trafic du fait de la faible rigidité qu'elle confère à l'enrobé). US 5.582.639 présume que l'enrobé reste maniable tant que les éléments fins ne sont pas liés par un bitume dur, et ce, que les cailloux (ou gravillons) n'aient été ou non déjà enrobés par un bitume dur, et propose donc un procédé selon lequel on enrobe préalablement les cailloux au moyen d'une première émulsion à rupture rapide d'un bitume dur, puis on ajoute au mélange, après rupture de la première émulsion, les éléments fins ainsi qu'une seconde émulsion d'un bitume mou dont la rupture intervient en fin de procédé. Selon l'enseignement de ce brevet, après épandage de l'enrobé, une migration entre le bitume dur (de grande viscosité) enveloppant les cailloux et le bitume mou (de faible viscosité) s'opère pour former un liant de viscosité moyenne. La rigidité et la résistance à la fatigue des enrobés obtenus par ces divers procédés à froid restent cependant insuffisantes pour permettre leur application à des couches de roulement d'important trafic. De plus, ces procédés n'ont pas permis de réduire significativement la consommation en liant hydrocarboné. Cet objectif est pourtant prioritaire pour des raisons économiques et écologiques évidentes.

On connaît, deuxièmement, les matériaux routiers à base de liant(s) hydraulique(s). La grande rigidité des matériaux hydrauliques constitue à la fois leur principale qualité (ils sont appréciés, pour cette raison, pour la réalisation de couche de base ou de fondation) et leur principal défaut : module de rigidité élevé qui se traduit, d'une part, par un manque de confort et d'adhérence lorsque ces matériaux sont utilisés pour des couches de roulement, et d'autre part, par l'apparition de fissures de fatigue (faïençage) sous l'effet des sollicitations dynamiques du trafic. S'ajoute à cela des phénomènes de retrait hydraulique lors de la prise du liant et de retrait thermique, également responsables de l'apparition de fissures. En revanche, leur insensibilité à la température les préserve des phénomènes de fluage et d'orniérage dont souffrent les enrobés hydrocarbonés (les bitumes sont en effet sensibles aux variations de température : fragiles à froid du fait d'une rigidité accrue, ils deviennent trop mous à chaud).

Compte tenu des qualités et défauts respectifs des enrobés hydrocarbonés et des matériaux hydrauliques, des techniques qualifiées de mixtes, mêlant liant(s) hydraulique(s) et liant(s) hydrocarboné(s) au sein d'un même matériau routier, se sont récemment développées. Ces techniques mixtes tentent de répondre aux exigences contraires et incompatibles des revêtements routiers telles que, d'une part, l'absence de fissuration, la souplesse, le confort, la résistance à la fatigue, au désenrobage et au plumage, généralement apportés par les liants hydrocarbonés, et, d'autre part, la portance, la faible déformation, la résistance au fluage et à l'orniérage, généralement apportées par les liants hydrauliques.

Ainsi, EP 545.740 décrit un procédé de double traitement à froid d'un matériau granulaire selon lequel : on prépare un pré-mélange d'un matériau granulaire (0/20 par exemple) et d'un premier liant hydraulique ou hydrocarboné, de préférence hydraulique, contenant le cas échéant des agents tensioactifs ; on transfère ce pré-mélange dans un malaxeur, dans lequel on ajoute un second liant hydrocarboné ou hydraulique, de préférence hydrocarboné. EP 535.282 décrit un liant composite comprenant une émulsion aqueuse d'un liant hydrocarboné, un liant hydraulique, un adjuvant destiné à maîtriser la vitesse de prise du liant hydraulique afin d'obtenir un produit liquide de viscosité inférieure à 1 Pa.s.. FR 2.705.662 décrit un enrobé à froid formé d'un squelette minéral (0/20 par exemple) associé à un liant résultant du mélange d'un liant hydraulique et d'un liant hydrocarboné comportant un bitume traité par des amines à chaînes courtes, un ou plusieurs surfactant(s) cationique(s), un ou plusieurs acide(s). FR 2.352.763 décrit un procédé de fabrication d'un revêtement semi-rigide pour couche de roulement exclusivement, dans lequel on mélange un mortier souple mixte, composé de sable, de ciment et d'une émulsion de bitume, à une ossature support bitumineuse riche en cavités (mélange de gros grains et de goudron, bitume ou liants bitumineux).

Les techniques mixtes fournissent des résultats certes encourageants, mais encore insatisfaisants et inégaux. Les enrobés obtenus s'apparentent, selon les dosages utilisés, soit à des matériaux hydrauliques dont la souplesse est améliorée sans pour autant être suffisante et comparable à celle des enrobés hydrocarbonés, soit à des enrobés hydrocarbonés dont la rigidité est augmentée mais reste trop faible pour certaines utilisations. De plus, il semble qu'intervienne une "compensation" partielle des effets respectifs des deux types de liant, qui oblige à maintenir des dosages encore importants en liants et explique que le développement des techniques mixtes n'a pas permis, à ce jour, de réaliser des économies substantielles sur les quantités de liants utilisées. Reste également à définir et mettre en place des protocoles de fabrication simples, économiques et faciles à maîtriser, pour permettre d'envisager la généralisation et la systématisation de ces techniques.

L'invention vise à proposer un procédé de fabrication d'un matériau routier granulaire enrobé à base de liant (s) hydraulique(s) ou autre(s) liant(s) minéral(aux), et de liant(s) hydrocarboné(s) ou autre(s) liant(s) organique(s), qui soit simple, économique, et qui conduise à l'obtention d'un enrobé aux caractéristiques mécaniques améliorées.

En particulier, un objectif de l'invention est de proposer un enrobé routier ayant une flexibilité convenable et une meilleure résistance à la fissuration, à la fatigue et au plumage, et, parallèlement, une portance et une résistance à l'orniérage et au fluage accrues.

Un autre objectif de l'invention est de fournir un procédé qui permette d'obtenir, selon les dosages, un matériau routier pour couche de fondation, de base ou de roulement.

Un autre objectif de l'invention est de proposer un procédé de fabrication d'un enrobé à froid, qui conserve les avantages des techniques d'enrobage à froid notamment à l'émulsion de bitume (simplicité, souplesse d'utilisation, économie et protection de l'environnement) et intègre ceux des techniques d'enrobage à chaud au bitume pur (étanchéité, adhérence, souplesse, confort, rugosité, capacité à recevoir un trafic immédiat et bonnes caractéristiques mécaniques des enrobés obtenus). L'invention vise également à fournir un matériau routier de grande maniabilité.

Un autre objectif de l'invention est de proposer un procédé respectueux de l'environnement, utilisant des quantités réduites de liants (minéral(aux) et organique(s)), par souci d'économie, de protection de l'environnement et de sécurité des personnes.

Pour ce faire, l'invention concerne un procédé de fabrication d'un matériau routier granulaire enrobé, utilisant au moins un liant organique et au moins un liant minéral, caractérisé en ce que :

- on utilise au moins deux fractions granulaires distinctes, une première fraction, dite fraction granulaire grossière, constituée de granulats moyens et/ou gros, et une deuxième fraction, dite fraction granulaire fine, constituée de granulats fins,
- on enrobe les granulats de la fraction granulaire grossière avec le liant organique, de façon à former une première phase, dite phase grossière organique, le terme "enrober" signifiant que l'on mélange les granulats et le liant jusqu'à ce que chaque granulat soit enveloppé au moins partiellement, et de préférence totalement, d'un film de liant organique ;
- on mélange les granulats de la fraction granulaire fine avec le liant minéral et avec une quantité d'eau d'apport, sans additif liant organique ou synthétique, de façon à former une deuxième phase, dite phase fine minérale,
- on mélange la phase grossière organique et la phase fine minérale pour obtenir un matériau prêt à l'épandage ou au stockage. A noter que la phase fine minérale et le matériau obtenu peuvent être stockés et/ou manipulés (et notamment, concernant le matériau final, transporté, répandu sur le sol à couvrir et compacté) tant que la prise du liant minéral n'est pas intervenue. Un retardateur de prise du liant minéral peut avantageusement être ajouté au liant minéral ou à la phase fine minérale en cas de stockage prolongé du matériau ou de ladite phase fine minérale. A noter que la phase organique peut également être stockée avant son mélange à la phase minérale.

L'invention consiste donc à préparer séparément une phase grossière organique et une phase fine minérale, puis à mélanger ces dernières. Le liant organique est par conséquent déjà fixé sur les gravillons (le terme "gravillons" désignant, dans toute la suite, les granulats de la fraction granulaire grossière) lors du mélange des deux phases, de sorte qu'il n'est pas ou peu "absorbé" par la phase fine minérale (mortier sableux). L'inventeur pense, a posteriori, que la prise du liant minéral se traduit par la formation d'agglomérats de mortier durci (granulats fins + liant minéral) venant combler les vides entre les gravillons enrobés, de sorte que les deux liants ne se mélangent pas (contrairement à l'effet recherché par US 5.582.639, aux principes de base des techniques mixtes de EP 535.282 ou FR 2.705.662 ou FR 2.352.763, et aux résultats fournis par l'ensemble des procédés antérieurs). La phase fine minérale et la phase grossière organique coexistent et coopèrent sans se mêler l'une à l'autre, liées entre elles par un film souple organique (tel qu'un film de bitume) qui adhère aux gravillons de la phase grossière et ne pénètre que très légèrement dans les agglomérats de mortier durci de la phase fine de façon à les sertir. A noter toutefois qu'une légère imprégnation des agglomérats de mortier par le liant organique peut être souhaitée, et obtenue avec un excès de liant organique, pour des raisons expliquées plus loin.

On obtient ainsi un squelette minéral particulièrement dense formé de gravillons et d'agglomérats de mortier durci, dont la cohésion est assurée par le liant souple organique. Le matériau résultant est à la fois étonnamment rigide et souple. La rigidité, la portance et la résistance à l'orniérage sont apportées par la densité du squelette minéral (très faible pourcentage de vide, les espaces entre les gravillons étant comblés par le mortier) et la présence d'agglomérats de mortier durci (dont le module de rigidité est très élevé). Les ensembles compacts (gravillons et agglomérats de mortier) formant le squelette minéral sont liés de façon élastique telles des articulations (effet rotule) par un film organique, qui confère cohésion, souplesse, déformabilité et résistance à la fatigue au matériau résultant, s'oppose à la remontée des fissures, et présente, de par sa finesse, une faible sensibilité aux variations de température. Chaque phase joue pleinement son rôle naturel, sans que les effets de chaque liant ne soient amoindris ou annihilés par la présence de l'autre liant.

La quantité de liant organique est ajustée en fonction de la destination du matériau et de la nature des granulats utilisés, afin d'obtenir les caractéristiques spécifiques de la couche considérée, en fonction de sa nature, de la classe de la chaussée, des contraintes climatiques ... Elle doit être suffisante pour permettre d'enrober les gros et/ou moyens granulats et de les lier entre eux et aux agglomérats de mortier durci, ainsi que pour assurer la maniabilité du mélange et conférer au matériau final les qualités requises de souplesse, élasticité, étanchéité, résistance à la fatigue, à la fissuration et au plumage. Cette quantité doit parallèlement être minimisée pour éviter les risques de ramollissement et de ressuage. L'inventeur a montré que le procédé selon l'invention permettait de réduire, de façon significative et surprenante, la quantité de liant organique.

Lorsque le matériau est destiné à la réalisation d'une couche de roulement, un surdosage du liant organique peut être utile pour provoquer, au cours du compactage du matériau répandu sur le sol à recouvrir, une pénétration du liant organique dans les agglomérats de mortier en cours de durcissement (réalisant, au sein de la phase fine minérale, un gradient de rigidité croissant de la surface vers le coeur des agglomérats de mortier durcis). Cette pénétration contribue au sertissage des gravillons et agglomérats en surface de la couche de roulement pour améliorer la tenue au plumage sous trafic, à l'autoréparation d'éventuels désordres, à la résistance à la fissuration.

Lorsque le matériau est destiné à la réalisation d'une couche de structure, un léger surdosage (inférieur au précédent) du liant organique peut également être utile, pour provoquer, au cours du compactage du matériau répandu sur le sol à recouvrir, une légère pénétration du liant organique dans les agglomérats de mortier en cours de durcissement, qui contribue à l'autoréparation d'éventuels désordres et à la résistance à la fissuration.

Il est à noter que la fraction granulaire grossière peut être enrobée à chaud ; avantageusement et selon l'invention, elle est enrobée à froid, c'est-à-dire au moyen d'un liant organique à température ambiante.

Avantageusement et selon l'invention, la fraction granulaire fine utilisée présente une distribution granulométrique 0/d (granulats de dimension maximale comprise entre 0 et d mm) avec d compris entre 2 et 4 mm. Elle comprend de préférence 15 à 25% d'éléments de dimension inférieure à 80 $\mu$m.

Avantageusement et selon l'invention, la fraction granulaire grossière utilisée présente une distribution granulométrique d/D (granulats dont les dimensions maximales sont comprises entre d mm et D mm), avec d compris entre 2 et 4 mm et D compris entre 6 et 20 mm. D est préférentiellement compris entre 6 et 14 mm pour un matériau pour couche de roulement, et entre 10 et 20 mm pour un matériau pour couche de structure.

Par souci d'économie, on utilise une fraction granulaire grossière constituée de granulats disponibles localement, et on adapte la nature du liant organique à celle des granulats utilisés. A noter qu'un pourcentage significatif de matériaux roulés ou semi-concassés peut être valablement ajouté à des granulats concassés pour former la fraction granulaire grossière, en vue d'augmenter la maniabilité de la phase grossière organique et du matériau final. Le liant organique est choisi pour sa mouillabilité et son adhésivité (active et passive), qui dépendent de la nature des granulats utilisés, ainsi que pour sa cohésivité.

Avantageusement et selon l'invention, on utilise, à titre de liant organique, un liant choisi parmi un bitume pur, un bitume fluxé, un bitume fluidifié, en particulier au moyen d'une huile végétale ou d'un dope plastifiant, une émulsion d'un bitume pur, une émulsion d'un bitume fluxé, une émulsion d'un bitume fluidifié, une mousse d'un bitume pur, une mousse d'un bitume fluxé, une mousse d'un bitume fluidifié (les liants précédemment cités constituant des liants hydrocarbonés), une résine thermoplastique, une émulsion de résine thermoplastique, une résine thermodurcissable, une émulsion de résine thermodurcissable, et par exemple une résine acrylique, une résine à base de monomères et/ou polymères d'éthyle vinyle acétate, une résine à base de monomères et/ou polymères de styrène butadiène styrène, lesdites résines étant utilisées directement ou en émulsion, un mélange de plusieurs des liants organiques précités.

A noter que l'utilisation d'un bitume pur ou d'une mousse de bitume nécessite une étape préalable de chauffage du liant et des granulats, tandis que l'utilisation de l'un des autres liants organiques cités permet d'enrober la fraction granulaire grossière à froid (c'est-à-dire à température ambiante, sans chauffage).

Le liant organique peut également contenir un monomère et/ou un polymère et/ou un dope plastifiant et/ou un additif minéral adapté(s) pour renforcer son adhésivité sur les granulats, et/ou modifier sa viscosité aux fins d'une meilleure maniabilité et d'une meilleure cohésivité, et/ou accélérer la rupture de l'émulsion lorsque celle-ci est utilisée. Le liant organique peut aussi contenir un additif organique, du type latex ou caoutchouc (notamment issu de pneus usagés) en vue d'accroître la souplesse du matériau obtenu.

On utilise préférentiellement, à titre de liant organique, une émulsion -et notamment une émulsion de bitume-, auquel cas, selon l'invention, on attend ou on provoque la rupture de l'émulsion dans la phase grossière organique avant de mélanger la phase grossière organique et la phase fine minérale.

Avantageusement et selon l'invention, on utilise, à titre de liant organique, une émulsion (de bitume par exemple) à rupture rapide ou moyenne, ayant un indice de rupture adapté pour que la rupture de l'émulsion intervienne dès l'obtention d'un mouillage, par l'émulsion, de l'ensemble des granulats de la fraction granulaire grossière. En particulier, on utilise une émulsion de bitume dont la rupture intervient approximativement au bout de 45 à 90 secondes -et de préférence d'une minute- de mélange et malaxage de la fraction granulaire grossière et de l'émulsion de bitume (durée de mélange souhaitée, à l'issue de laquelle tous les granulats doivent être convenablement mouillés et le mélange homogène).

En particulier, avantageusement et selon l'invention, on utilise d'une part une fraction granulaire grossière à base de silico-calcaire, et d'autre part, à titre de liant organique, une émulsion (de bitume par exemple) comprenant au moins un agent émulsifiant cationique et au moins un agent émulsifiant amphotère. En particulier, on utilise une émulsion dont les agents émulsifiants comprennent 20 à 60 % d'agents cationiques et 80 à 40% d'agents amphotères. La présence d'agents de nature différente facilite la rupture de l'émulsion lors de son mélange avec la fraction granulaire grossière, et favorise la cohésivité du bitume par liaison polaire entre ses globules. On peut également utiliser une émulsion comprenant au moins un agent émulsifiant anionique et au moins un agent émulsifiant amphotère, avec une fraction granulaire grossière à caractère basique (calcaire).

En variante, on utilise une émulsion (de bitume par exemple) plus stable et on provoque la rupture de l'émulsion à la demande -avant ou, de préférence, après mouillage par l'émulsion de l'ensemble des granulats de la fraction granulaire grossière-, au moyen d'une composition, dite composition de rupture, à caractère basique dans le cas d'une émulsion à caractère cationique, choisie parmi un lait de chaux, une composition à base de chaux pulvérulente vive ou éteinte, une composition à base d'un liant minéral et notamment d'un liant à base de métakaolin et de chaux. Dans le cas d'une émulsion à caractère anionique, la nature chimique de la composition de rupture doit présenter un caractère acide. La composition de rupture est par exemple pulvérisée sur la phase grossière organique. Il convient toutefois de ne pas utiliser une émulsion trop stable, qui risquerait de rendre la rupture difficile en dépit de l'emploi d'une composition de rupture.

Avantageusement et selon l'invention, on utilise, à titre de liant organique, un bitume mou (pur ou sous forme d'émulsion ou de mousse) de pénétrabilité supérieure ou égale à 60/70, et de préférence supérieure ou égale à 70/100, en vue d'obtenir une phase grossière organique maniable, cohésive et souple. Le bitume est choisi en fonction des contraintes climatiques, d'autant plus mou que le climat est froid et inversement.

Il est à noter que l'enrobage des gros et/ou moyens granulats à l'aide d'un bitume mou est contraire aux enseignements de FR 2.623.219, EP 781.887 et US 5.582.639, qui préconisent à l'inverse d'enrober de gros granulats au moyen d'une émulsion de bitume dur en vue d'améliorer la rigidité de l'enrobé, et d'associer des granulats fins à une émulsion de bitume mou afin de préserver la maniabilité du matériau. Cette association est malheureuse compte tenu de la grande surface spécifique des granulats fins : elle entraîne une consommation importante de liant sans apporter de qualités mécaniques au matériau.

Dans l'invention, le liant minéral remplace avantageusement, dans la fraction fine, le bitume mou antérieurement utilisé. Il en résulte deux avantages majeurs : d'une part, une économie substantielle de liant organique et la possibilité d'augmenter le pourcentage d'éléments de dimension inférieure à 80 $\mu$m (ces éléments conférant compacité, étanchéité, durabilité... au matériau final), puisque le liant organique est associé à une fraction granulaire de faible surface spécifique et n'est pas absorbé par la fraction granulaire fine ; et d'autre part, la possibilité d'utiliser un bitume mou pour la fraction granulaire grossière, puisque la phase fine minérale formée apporte au matériau la rigidité souhaitée en comblant les vides entre les gros et/ou moyens granulats par des agglomérats de mortier particulièrement durs. L'utilisation d'un tel bitume, notamment sous forme d'émulsion, simplifie et facilite la mise en oeuvre du procédé, et permet de s'affranchir d'une étape de chauffage du bitume sans entraîner une dégradation de la qualité de l'enrobage et des propriétés mécaniques du matériau obtenu. Les avantages des techniques d'enrobage à chaud sont préservés dans le cadre d'un procédé à froid selon l'invention.

Avantageusement et selon l'invention, l'émulsion de bitume utilisée contient de 50 à 70 % -de préférence 65%- de bitume en poids d'émulsion.

Avantageusement et selon l'invention, pour la réalisation d'un matériau routier pour couche de roulement, on utilise, à titre de liant organique, un liant hydrocarboné à base de bitume, en une quantité telle que le poids de bitume résiduel après mélange de la phase grossière organique et de la phase fine minérale soit compris entre 1,5 et 4,5% -de préférence entre 2,5 et 3,5%- du poids total d'agrégats secs. A noter que les termes "agrégats secs" désignent les granulats des fractions granulaires fine et grossière et les particules de liant minéral. L'inventeur estime que ces quantités conduisent à la présence d'un léger excès de bitume dans la couche de roulement, évitant un plumage prématuré de ladite couche (le bitume en excès imprégnant les agglomérats de mortier sur une certaine épaisseur à partir de leur surface).

Pour la réalisation d'un matériau routier pour couche de structure (couche de base ou de fondation), on utilise préférentiellement, à titre de liant organique, un liant hydrocarboné à base de bitume, en une quantité telle que le poids de bitume résiduel après mélange de la phase grossière organique et de la phase fine minérale soit compris entre 0,5 et 2,5% -de préférence entre 1 et 2%- du poids total d'agrégats secs.

Ces valeurs sont bien inférieures aux dosages usuels antérieurs. Elles semblent s'expliquer, a posteriori, par le fait que, selon l'invention, dans le mélange final, le liant organique ne pénètre que peu dans la phase fine et enrobe essentiellement des ensembles compacts (gros et/ou moyens granulats et agglomérats de mortier) de faible surface spécifique. A noter qu'il n'est pas utile, si le matériau est destiné à la réalisation d'une couche de structure, de prévoir des quantités de liant conduisant à un surdosage significatif du bitume résiduel.

Compte tenu des dosages relativement faibles préconisés selon l'invention, on utilise de préférence un bitume à fort coefficient de mouillabilité et filmabilité, en vue d'obtenir un bon enrobage des granulats de la fraction granulaire grossière. Lorsqu'une émulsion de bitume est utilisée, son titrage en eau et en émulsifiants est choisi à la fois en fonction de la quantité d'eau utile pour le mélange final et de façon à faciliter l'enrobage des granulats grossiers et la rupture de l'émulsion.

En variante ou en combinaison, on effectue, préalablement à leur enrobage, un pré-mouillage à l'eau des granulats de la fraction granulaire grossière. Cette opération peut être combinée à, ou remplacée par, un lavage préalable (avant enrobage) des granulats de la fraction granulaire grossière, dont l'objectif est d'évacuer les éventuelles particules fines (poussière) qui subsistent dans cette fraction, en vue d'augmenter la mouillabilité et l'adhésivité du bitume. Les fines évacuées sont récupérées et intégrées dans la phase fine minérale par recyclage de l'eau de lavage dans ladite phase fine minérale ; elles participent au pourcentage total d'éléments inférieurs à 80 μm.

En variante ou en combinaison, l'enrobage de la fraction granulaire grossière avec le liant organique s'effectue en plusieurs étapes : on mélange les gros granulats avec le liant organique de façon à obtenir un enrobage partiel des gros granulats, puis on ajoute les granulats moyens et l'on mélange le tout (jusqu'a obtenir un enrobage total des gros et moyens granulats).

L'adhésivité du bitume sur les gros et/ou moyens granulats dépend de la viscosité du bitume, de son affinité pour les granulats (différente suivant la nature de ces derniers), qui est facilitée par le pré-mouillage, et de la formulation de l'émulsion (présence éventuelle de dopes) lorsque celle-ci est utilisée.

Avantageusement et selon l'invention, on effectue, préalablement à leur enrobage, un laquage des granulats de la fraction granulaire grossière au moyen d'une composition minérale, dite composition de laquage, choisie parmi un lait de chaux, une composition à base de chaux pulvérulente vive ou éteinte, une composition à base d'un liant minéral et notamment d'un liant à base de métakaolin et de chaux, ou au moyen de toute composition de laquage minérale ou organique à caractère chimique (acide ou basique) différent de celui du liant organique. La composition de laquage est utilisée en une quantité telle qu'elle comprenne un poids de matière sèche compris entre 0,5 et 2% du poids total d'agrégats secs. Un tel laquage contribue à la rupture de l'émulsion de bitume lorsque celle-ci est utilisée. Elle augmente de plus l'adhésivité du bitume résiduel sur les granulats et sa résistance au vieillissement, améliore sa cohésivité et sa viscosité immédiate et ultérieure aux températures extrêmes, favorisant ainsi la résistance du mélange final à la fissuration, à l'orniérage et à la fatigue, et donc sa durabilité. Cette opération peut être combinée à un pré-mouillage desdits granulats. Le terme "laquage" signifie que l'on mélange la composition de laquage avec les granulats de façon à mouiller la surface des granulats par la composition et/ou recouvrir la surface des granulats par un film de composition. Le recyclage de l'excédent de composition de laquage dans la phase fine minérale fait avantageusement participer ladite composition à la prise hydraulique.

En variante, avantageusement et selon l'invention, on introduit progressivement dans la phase grossière organique en cours de formation (peu après la mise en contact des granulats et du liant organique et durant toute l'étape de malaxage de la phase organique, avant le mélange des deux phases), une composition minérale, également dite composition de laquage, choisie parmi un lait de chaux, une composition à base de chaux pulvérulente vive ou éteinte, une composition à base d'un liant minéral et notamment d'un liant à base de métakaolin et de chaux, ou au moyen de toute composition de laquage minérale ou organique à caractère chimique (acide ou basique) différent de celui du liant organique. Ce mode opératoire confère de nouveaux avantages tels la maîtrise de la rupture de l'émulsion, une meilleure mouillabilité, une maniabilité accrue par élévation de température lorsque la chaux vive est utilisée, l'absorption de l'eau libre de la composition.

Avantageusement et selon l'invention, on utilise, à titre de liant minéral, un liant choisi parmi un ciment (ciment Portland, ciment Portland composé, ciment de haut fourneau, ciment au laitier et aux cendres, ciment pouzzolanique...), un liant routier composite, un liant pouzzolanique activé à base de laitier de haut fourneau, de fines de laitiers de hauts fourneaux, d'argiles calcinées, de fines de pouzzolane, de cendres volantes silico-alumineuses et/ou sulfo-calciques, un mélange de plusieurs des composés précités.

Un mélange à base de métakaolin et de chaux (liant pouzzolanique) est préféré pour son pouvoir durcisseur élevé, sa prise lente qui limite les risques d'apparition de fissures, son fort indice d'activité, sa capacité à absorber les métaux lourds, sa maniabilité et son caractère environnemental naturel. Il est particulièrement recommandé si une émulsion de bitume est utilisée à titre de liant organique, compte tenu de son affinité pour l'eau, et donc de sa capacité à absorber l'eau de l'émulsion. On utilise préférentiellement une composition pulvérulente comprenant 50 à 70% en poids de métakaolin et 30 à 50% en poids de chaux, ainsi que divers additifs éventuels. Une telle composition peut également servir de composition de laquage, mélangée à la fraction granulaire grossière préalablement à son enrobage ou tout au long de celui-ci. L'excédent issu du laquage est recyclé à titre de liant minéral de la phase fine.

Le liant minéral utilisé se présente préférentiellement sous forme pulvérulente, l'eau nécessaire à la prise ultérieure dudit liant provenant de l'eau naturelle des granulats et de l'eau d'apport ainsi que de l'émulsion (lorsqu'elle est utilisée), de l'eau de lavage et/ou de pré-mouillage des gravillons (lorsqu'une telle opération est effectuée) et de la composition de laquage des gravillons (lorsqu'une telle opération est effectuée). Le liant minéral pulvérulent est mélangé tel quel à la fraction granulaire fine et à l'eau d'apport. En variante, le liant minéral est mélangé à tout ou partie de l'eau d'apport préalablement à son mélange à la fraction granulaire fine.

La quantité d'eau d'apport à ajouter est ajustée de sorte que la quantité totale d'eau disponible dans le mélange final (eau d'apport et, le cas échéant, eau de l'émulsion et/ou eau de pré-mouillage et/ou de laquage des gravillons) soit majoritairement -et de préférence entièrement- consommée par la réaction chimique du liant minéral, en vue d'obtenir une bonne tenue au jeune âge et de permettre un trafic immédiat. Une quantité d'eau résiduelle dans le mélange final des phases fine minérale et grossière organique n'excédant pas 2% en poids dudit mélange, est tolérée. La quantité d'eau d'apport utilisée varie entre 2 et 8% du poids total d'agrégats secs.

La quantité de liant minéral est ajustée en fonction de la destination du matériau, afin d'obtenir les caractéristiques spécifiques de la couche considérée, en fonction de sa nature, de la classe de la chaussée, des contraintes climatiques ... Elle doit être, d'une part, suffisante pour permettre de réaliser un mélange homogène avec la fraction granulaire fine, de stabiliser les granulats fins -dans les emplacements correspondants- sous forme d'agglomérats collés aux gros et/ou moyens granulats par le liant organique, et d'apporter au matériau final les qualités requises de rigidité, compacité, portance, résistance à l'orniérage et au fluage. Elle doit être, d'autre part, minimisée pour éviter d'obtenir un matériau final trop rigide.

Ainsi, avantageusement et selon l'invention, pour la réalisation d'un matériau routier pour couche de roulement, on utilise une quantité de liant minéral comprise entre 2 et 5% -de préférence environ 2,5 à 4,5%- du poids total d'agrégats secs. Les valeurs fournies concernent la forme sèche (pulvérulente) initiale du liant minéral, que celui-ci soit ajouté à la fraction granulaire fine sous forme pulvérulente ou mélangée à l'eau d'apport Pour la réalisation d'un matériau routier pour couche de structure (base ou fondation), on utilise préférentiellement une quantité de liant minéral comprise entre 2 et 8% -et notamment environ 3 à 5%- du poids total d'agrégats secs. Ces valeurs sont inférieures aux dosages usuels antérieurs.

La prise du liant minéral est exothermique et contribue à la maniabilité, à l'adhésivité des phases et à la légère pénétration de l'excès de bitume dans la phase fine (en la ramollissant) si un surdosage en bitume est prévu (pour une couche de roulement notamment).

A noter que, si le matériau n'est pas destiné à être stocké mais est fabriqué en vue d'un épandage immédiat ou dans un court délai, un dope accélérateur de prise peut éventuellement être utilisé pour améliorer sa tenue au jeune âge et sa capacité à recevoir un trafic immédiat, favoriser la formation et la stabilité des agglomérats de mortier durci et empêcher une éventuelle migration indésirable du bitume ou autre liant organique vers la phase fine minérale (en cas d'adhérence insatisfaisante de celui-ci sur les gros granulats).

Les pourcentages respectifs de chacun des deux liants varient selon la destination du matériau. Ainsi, la quantité de liant organique d'une couche de roulement est avantageusement supérieure à celle d'une couche de structure. En effet, il faut plus de liant organique pour répondre aux exigences de souplesse, déformabilité, confort, étanchéité, résistance au désenrobage et au plumage de la couche de roulement, qu'il n'en faut pour permettre d'abaisser le module de rigidité jusqu'à une valeur convenable et pallier les risques de fissuration de la couche de structure. A contrario, la quantité de liant minéral d'une couche de structure est avantageusement supérieure à celle d'une couche de roulement, pour conférer portance et résistance à la déformation à la couche de structure. Des quantités moindres suffisent par ailleurs pour apporter cohésion et résistance à l'orniérage et au fluage à la couche de roulement.

Ainsi, plus on s'éloigne de la surface d'une chaussée selon l'invention, plus le pourcentage de liant organique diminue et plus le pourcentage de liant minéral augmente. Toutefois, selon l'invention, le pourcentage total des deux liants, en poids total d'agrégats secs, reste sensiblement le même en tous points de la chaussée, c'est-à-dire qu'il reste le même pour un matériau pour couche de roulement et pour un matériau pour couche de structure.

Il est à noter que, dans tous les procédés antérieurs, les liants hydrauliques sont utilisés à titre de "fillers" (particules fines destinées à remplir les vides microscopiques existant dans le matériau) plus ou moins rigidifiants. Dans l'invention, la phase granulaire fine et le liant minéral participent à l'ossature du squelette minéral en remplissant les vides macroscopiques (et éventuellement microscopiques) entre les gravillons. Les fractions granulaires fine et grossière sont calibrées et dosées de sorte qu'au sein du mélange final, les gravillons aient au moins une face en contact et que les agglomérats de mortier durci comblent le plus exactement possible les vides entre les gravillons sans les séparer. On utilise donc le plus faible pourcentage possible de fraction granulaire fine (et de liant minéral...). Avantageusement et selon l'invention, la fraction granulaire grossière utilisée représente 55 à 70 % du poids total des fractions granulaires fine et grossière.

Avantageusement et selon l'invention, la fraction granulaire fine et le liant minéral réunis comprennent entre 6 et 15% -de préférence entre 8 et 12%- d'éléments de dimension inférieure à 80 $\mu$m, en poids total d'agrégats secs, afin d'augmenter la compacité du matériau obtenu. Ces pourcentages, supérieurs à ceux antérieurement préconisés, permettent d'obtenir une phase minérale particulièrement dense qui vient plus facilement combler les vides de la phase grossière organique.

L'invention s'étend aux matériaux routiers granulaires enrobés obtenus par un procédé selon l'invention, ainsi qu'aux couches de structure et de roulement et aux chaussées réalisées à partir de tels matériaux.

L'invention concerne également un procédé de fabrication d'un matériau routier granulaire enrobé caractérisé en combinaison par tout ou partie des caractéristiques mentionnées ci-dessus et ci-après.

D'autres buts, caractéristiques et avantages de l'invention apparaîtront à la lecture des exemples de réalisation ci-dessous, fournis à titre non limitatif.

Exemple 1 :

On prépare, selon l'invention, un matériau routier granulaire enrobé pour couche de structure, comprenant :

| Fraction granulaire grossière : | granulats moyens 2/6 C | 17,0 % |
| | gros granulats 6/14 C | 42,0 % |
| Fraction granulaire fine : | sable 0/2 F | 26,0 % |
| | sable 0/2,5 R | 11,0 % |
| Liant pouzzolanique (liant minéral) : | métakaolin | 2,4 % |
| | chaux | 1,6 % |
| | (Total agrégats secs) | 100 % |
| Emulsion de bitume (liant organique) à 65% d'un bitunie de pénétrabilité 70/100 | | 4,0 % |
| (soit un pourcentage de bitume résiduel de 2,6%) Eau d'apport | | 5,5 % |

La granulométrie théorique des agrégats secs de M1 (fractions granulaires fine et grossière et liant pouzzolanique) est fournie ci-dessous à titre indicatif :

| Tamis en mm | % de passant |
|---|---|
| 20 | 100,00 |
| 16 | 99,0 |
| 14 | 96,9 |
| 12,5 | 93,2 |
| 10 | 83,1 |
| 8 | 71,6 |
| 6,3 | 60,5 |
| 4 | 49,8 |
| 2 | 38,4 |
| 1 | 28,6 |
| 0,5 | 20,8 |
| 0,315 | 15,5 |
| 0,2 | 12,0 |
| 0,08 | 7,66 |

Il est à noter que le pourcentage d'éléments de dimension inférieure à 80 $\mu$m (qui inclut le liant minéral) se situe dans la fourchette basse de ce qui est prévu selon l'invention (entre 6 et 15%). Malgré cela, la compacité du matériau M1 obtenu s'avère très convenable (voir les résultats des essais sur chantier rapportés ci-après). Un pourcentage supérieur d'éléments inférieurs à 80 $\mu$m devrait permettre d'améliorer encore la compacité du matériau et, ce faisant, sa résistance à l'orniérage, son étanchéité, sa durabilité... A cette fin, le sable roulé 0/2,5 R prévu dans la formulation de M1 peut être remplacé par un sable fillerisé 0/2 F, sans incidence notable sur la maniabilité de la phase fine minérale et du matériau final.

Le matériau, noté M1, est préparé selon le procédé suivant : on mélange la fraction granulaire grossière 2/14 et l'émulsion de bitume dans un malaxeur usuel, en ajoutant une faible portion de l'eau d'apport si nécessaire. Simultanément ou consécutivement, on mélange la fraction granulaire fine 0/2 (sable 0/2F et sable 0/2,5R) et le mélange de métakaolin et de chaux dans un malaxeur ou mélangeur usuel. Lorsqu'un mélange homogène est obtenu entre la fraction granulaire grossière et l'émulsion de bitume (soit environ au bout d'une minute de mélange), on mélange les deux phases précédemment obtenues et l'eau d'apport restante. Pour ce faire, on incorpore la phase fine minérale et l'eau d'apport dans le premier malaxeur contenant la phase grossière organique (premier mode opératoire) ou on incorpore l'eau d'apport et la phase grossière organique dans le deuxième malaxeur contenant la phase fine minérale (deuxième mode opératoire) ou on verse simultanément les deux phases et l'eau d'apport dans un troisième malaxeur (troisième mode opératoire). Le matériau M1 en exemple a été préparé selon le premier mode opératoire. A noter que la phase grossière organique et la phase fine minérale peuvent être préparées successivement dans le même malaxeur (la phase préparée en premier étant momentanément stockée durant la préparation de la seconde phase), dans lequel on effectue également le mélange final.

Il est à noter que le mélange final entre les deux phases est de préférence effectué après rupture complète de l'émulsion de bitume. Dans le présent exemple, l'émulsion utilisée était une émulsion à rupture moyenne, et la rupture n'était pas totalement réalisée lorsque les deux phases ont été mélangées. De sorte qu'une partie du bitume n'était pas encore fixée sur les gravillons lors du mélange final. L'inventeur avait cependant tenu compte de ce phénomène en prévoyant un dosage relativement élevé en émulsion de bitume (2,6% de bitume résiduel). L'utilisation d'une émulsion à rupture rapide devrait aisément permettre de réduire ce dosage à 1,5 ou 2%.

Essai n°1 en laboratoire sur le matériau de l'exemple 1 :

On confectionne, à partir du matériau M1, des éprouvettes de 16 cm de diamètre et 16 cm de hauteur ($\phi$16h16), que l'on écrase à 28 jours, selon le protocole décrit par la norme NF P 98-232-3 "Essai de compression diamétrale sur des matériaux traités aux liants hydrauliques et pouzzolaniques".

La résistance en traction indirecte $R_{tb}$ (correspondant à la résistance en compression diamétrale du matériau) et le module élastique $E_{tb}$ (également dit module de rigidité, correspondant au module sécant à 30% de la résistance en compression diamétrale du matériau) de ces éprouvettes sont mesurés et calculés conformément à cette même norme. Les résultats sont les suivants :

$$R_{tb} = 0,27 \text{ MPa}$$

$$E_{tb} = 7223 \text{ MPa}$$

Le matériau M1 selon l'invention présente avantageusement un module élastique $E_{tb}$ inférieur à celui des graves ciments connues usuellement utilisées pour les couches de structure (qui varie entre 20 000 et 40 000). Il présente donc moins de risques de fissuration et de cassure que ces matériaux antérieurs.

A noter que la norme NF P 98-232-3, qui ne s'applique qu'aux matériaux hydrauliques, a été transposée au matériau mixte selon l'invention pour combler l'absence de norme spécifique susceptible de définir les performances mécaniques d'un tel matériau. Les résultats obtenus sont donc à analyser avec prudence. Et c'est pourquoi leur interprétation a été vérifiée par la réalisation d'un chantier expérimental et l'observation de l'évolution de ce chantier.

Exemple 2 :

On prépare, selon l'invention, un matériau routier granulaire enrobé pour couche de roulement, comprenant :

| | | |
|---|---|---|
| Fraction granulaire grossière : | granulats moyens 2/6 C | 17,0 % |
| | gros granulats 6/10 C | 42,0 % |
| Fraction granulaire fine : | sable 0/2 F | 27,5 % |
| | sable 0/2,5 R | 11,0 % |
| Liant pouzzolanique(liant minéral) : | métakaolin | 1,5 % |
| | chaux | 1,0 % |
| | (Total agrégats secs) | 100 % |
| Emulsion de bitume (liant organique) à 65% d'un bitume de pénétrabilité 70/100 : | | 6,0 % |
| (soit un pourcentage de bitume résiduel de 3,9%) Eau d'apport : | | 5,5% |

La granulométrie théorique des agrégats secs de M2 (fractions granulaires fine et grossière et liant pouzzolanique) est fournie ci-dessous à titre indicatif :

| Tamis en mm | % de passant |
|---|---|
| 12,5 | 100,00 |
| 10 | 96,4 |
| 8 | 78,6 |
| 6,3 | 61,4 |
| 4 | 48,4 |
| 2 | 38,2 |
| 1 | 28,0 |

Suite de tableau

| Tamis en mm | % de passant |
|---|---|
| 0,5 | 19,6 |
| 0,315 | 14,6 |
| 0,2 | 10,9 |
| 0,08 | 6,77 |

Comme précédemment expliqué pour M1, le pourcentage dans M2 d'éléments de dimension inférieure à 80 μm (qui inclut le liant minéral) se situe dans la fourchette basse de ce qui est prévu selon l'invention. Malgré cela, la compacité du matériau M2 obtenu s'avère très convenable (voir les résultats des essais sur chantier rapportés ci-après). Un pourcentage supérieur d'éléments inférieurs à 80 μm devrait permettre d'améliorer encore la compacité du matériau et, ce faisant, sa résistance à l'orniérage, son étanchéité, sa durabilité...

Le matériau, noté M2, est préparé selon le mode opératoire suivant : on mélange la fraction granulaire grossière 2/10 et l'émulsion de bitume dans un malaxeur usuel. Simultanément ou consécutivement, on mélange la fraction granulaire fine 0/2 (sable 0/2F et sable 0/2,5R) et le mélange de métakaolin et de chaux dans un malaxeur ou mélangeur usuel. Lorsqu'un mélange homogène est obtenu entre la fraction granulaire grossière et l'émulsion de bitume (soit environ au bout d'une minute de mélange), on mélange les deux phases précédemment obtenues et l'eau d'apport, selon l'un des modes opératoires décrits dans l'exemple 1.

Le mélange final entre les deux phases est de préférence effectué après rupture de l'émulsion de bitume. Dans le présent exemple, l'émulsion utilisée était une émulsion à rupture moyenne, et la rupture n'était pas totalement réalisée lorsque les deux phases ont été mélangées. Le dosage en émulsion de bitume préconisé (3,9% de bitume résiduel) devrait aisément être réduit à 2,5 ou 3% en utilisant une émulsion à rupture rapide.

Essai n°2 en laboratoire sur le matériau de l'exemple 2 :

La tenue à l'eau et le pourcentage de vides, pour une température et un compactage donnés, du matériau M2 sont déterminés selon le protocole décrit par la norme NF P 98-251-4 "Essai Duriez sur mélanges hydrocarbonés à froid à l'émulsion de bitume".

L'essai Duriez permet d'illustrer le comportement du matériau face aux agressions de l'eau, et donc d'estimer l'adhésivité du bitume et la résistance au désenrobage du matériau.

On réalise, à partir du matériau M2, des éprouvettes de 80 mm de diamètre par compactage statique double effet. On détermine la masse volumique apparente MVA desdites éprouvettes par pesée hydrostatique et le pourcentage de vides du matériau, la résistance en compression simple R des éprouvettes après conservation à l'air pendant 14 jours -à 18°C et 50% d'hygrométrie-, la résistance en compression simple r des éprouvettes après conservation à l'air pendant 7 jours -à 18°C et 50% d'hygrométrie- puis en immersion dans l'eau pendant 7 jours supplémentaires -également à 18%-, la tenue à l'eau du matériau s'exprimant par le rapport r/R. Les résultats sont les suivants :

r = 4,77 MPa
R = 5,66 MPa
r/R = 0,84
MVA = 2258 g/cm$^3$
% vides = 10,8

Les résistances en compression simple et la tenue à l'eau du matériau M2 sont tout à fait satisfaisantes et laissent présager un bon comportement du matériau dans le temps (cohésion, faible usure...).

Réalisation d'un chantier avec les matériaux des exemples 1 et 2 et essais consécutifs :

La chaussée d'une route menant à une déchetterie, soumise à un important trafic de véhicules de tonnages élevés, est réalisée comme suit :

- une épaisseur de 5 cm de granulats 0/20 est répandue sur le support pour en rectifier la planéité,
- aucune couche de fondation ou de base n'est réalisée,
- des couches de roulement adjacentes, de 9 à 10 cm d'épaisseur, sont réalisées (directement sur le support, ou plus exactement sur la couche de granulats recouvrant ce dernier) au moyen :

- du matériau M1 selon l'invention (matériau pour couche de structure), sur un premier tiers de la longueur de la route définissant une planche S,
- du matériau M2 selon l'invention (matériau pour couche de roulement), sur un deuxième tiers de la longueur de la route définissant une planche P,
- d'un matériau A2, sur le troisième tiers de la longueur de la route définissant une planche Q. Ledit matériau A2 possède une formule similaire à celle de M2 (à l'exception de la proportion d'émulsion de bitume) mais a été fabriqué selon un procédé antérieur. Le matériau A2 est en effet réalisé en mélangeant simultanément, en une seule étape, l'ensemble de ses constituants dans un malaxeur usuel.

La formule du matériau A2 est donnée ci-dessous :

| Fraction granulaire grossière : | granulats moyens 2/6 C | 17,0 % |
|---|---|---|
| | gros granulats 6/10 C | 42,0 % |
| Fraction granulaire fine : | sable 0/2 F | 27,5 % |
| | sable 0/2,5 R | 11,0 % |
| Liant pouzzolanique(liant minéral) : | métakaolin | 1,5 % |
| | chaux | 1,0 % |
| | (Total agrégats secs) | 100 % |
| Emulsion de bitume (liant organique) à 65% d'un bitume de pénétrabilité 70/100 : | | 8,5 % |
| (soit un pourcentage de bitume résiduel de plus de 5,5%) Eau d'apport : | | 5,5 % |

A noter que les granulats utilisés pour la fabrication de A2 ont les mêmes provenance, nature et distribution granulométrique que ceux utilisés pour la fabrication de M2. De même, le liant minéral de A2 est identique au liant minéral de M2, et est employé dans les mêmes proportions (en poids total d'agrégats secs). L'émulsion de bitume de A2 est également celle du matériau M2, mais elle est ajoutée en une proportion bien supérieure dans A2 pour compenser son "absorption" partielle par le sable et le liant minéral lors du mélange.

A noter également que la chaussée a été exécutée dans des conditions extrêmes : météo défavorable (pluies abondantes), assise détrempée, flaques d'eau en rives, portance médiocre du support, trafic lourd immédiat. Elle est, de plus, soumise à des conditions d'utilisation particulièrement sévères : trafic lourd permanent (2384 véhicules -8097 essieux- par mois dans les deux sens, 73 000 tonnes dans le sens entrant, 30 000 tonnes dans le sens sortant), forte pollution de la couche de roulement (boue apportée par les roues des camions). Enfin, les couches de roulement sont d'autant plus vulnérables qu'elles ne sont soutenues ni par une couche de fondation ni par une couche de base ni par des épaulements latéraux.

D'observations visuelles menées sur la chaussée deux et trois semaines après sa réalisation, il ressort que :

- un carottage des planches S et P a été réalisé à 14 jours,
- le carottage de la planche Q n'a pu être effectué qu'à l'issue de la troisième semaine,
- les planches S et P selon l'invention présentent un bon comportement sous trafic,
- la planche Q présente des ornières dans le sens entrant des camions,
- les planches S et P présentent une bonne texture et offrent une impression favorable vis-à-vis du plumage,
- la planche Q est l'objet de départ de gravillons au niveau des bandes de roulement.

Pour confirmer ces impressions initiales, des carottes sont prélevées sur chaque planche, alors âgée de 3 mois, pour en déterminer, d'une part, la compacité, et, d'autre part, les caractéristiques mécaniques selon la norme NF P 98-232-3 (voir Essai n° 1 ci-dessus). Les résultats sont les suivants :

Planche S (matériau M1 selon l'invention pour couche de structure) :

MVR = 2548 g/cm$^3$ (masse volumique réelle)
MVA = 2343 g/cm$^3$ (masse volumique apparente)
compacité = 91,9 % (soit 8,1 % de vides)
$R_{tb}$ = 1,05 MPa
$E_{tb}$ = 6725 MPa

Planche P (matériau M2 selon l'invention pour couche de roulement) :

MVR = 2502 g/cm$^3$
MVA = 2279 g/cm$^3$
compacité = 91,1 % (soit 8,9 % de vides)
$R_{tb}$ = 0,67 MPa
$E_{tb}$ = 3821 MPa

Planche Q (matériau A2 selon un procédé antérieur, pour couche de roulement) :

MVR = 2449 g/cm$^3$
MVA = 2249 g/cm$^3$
compacité = 91,8 % (soit 8,2 % de vides)
$R_{tb}$ = 0,40 MPa
$E_{tb}$= 3826 MPa

La compacité des matériaux M1, M2 et A2 est tout à fait satisfaisante.

Les résultats concernant les caractéristiques mécaniques ($R_{tb}$ et $E_{tb}$) des matériaux doivent être interprétés avec précaution, compte tenu que les essais de compression diamétrale normalisés pratiqués ne s'appliquent pas aux enrobés hydrocarbonés à froid (ils concernent les matériaux hydrauliques) et sont normalement réalisés sur des éprouvettes élaborées en laboratoire (selon la norme NF P 98-230-1 ou NF P 98-230-2) et non sur des carottes prélevées sur chantier.

On constate toutefois que la planche S selon l'invention présente, d'une part, une résistance en traction indirecte similaire à celle des graves ciments connues, et, d'autre part, un module élastique inférieur à celui des graves ciments connues (usuellement compris entre 20000 et 30000 MPa). Ces performances mécaniques révèlent un matériau qui, non seulement conserve une portance convenable, mais de plus est dépourvu des défauts majeurs des matériaux antérieurs, liés à leur module élastique trop élevé : problèmes importants de fissuration, inconfort, défaut de planéité, qui nécessitent l'emploi d'artifices coûteux tels que des armatures, joints de dilatation...

On constate, par ailleurs, que la planche P selon l'invention combine une bonne résistance en traction indirecte et un module élastique peu élevé mais suffisant, de sorte que la couche de roulement obtenue est à la fois souple et résistante à l'orniérage.

A contrario, la planche Q, dont la déformabilité est correcte (module élastique convenable), présente une résistance en traction trop faible. En outre, on constate que les modules élastiques des matériaux M2 et A2 sont du même ordre, alors que le matériau A2 contient un pourcentage bien supérieur de bitume résiduel. En d'autres termes, une souplesse identique et une résistance à l'orniérage supérieure à celle de la planche Q sont obtenues pour la planche P avec moins de bitume. Ce résultat tend à confirmer le principe énoncé par l'inventeur, selon lequel une partie du bitume du matériau A2 (planche Q) est défavorablement absorbé par la fraction fine et le liant minéral, et n'est pas utile pour les caractéristiques mécaniques et de souplesse du matériau.

Ces résultats sont à rapprocher des observations visuelles rapportées ci-dessus et des tests suivants relatifs à l'orniérage et à la macrotexture des couches de roulement, qui confirment les conclusions précédentes.

Des mesures d'orniérage sont menées sur les planches S, P et Q âgées de 3 mois, en des zones fortement sollicitées (bandes de passage des roues des véhicules). Ces mesures indiquent la profondeur d'effondrement, dite profondeur d'orniérage, de la chaussée sous une règle de 1m.

La profondeur d'orniérage de la planche S (couche de structure selon l'invention) varie entre 4 et 10 mm, et est en moyenne égale à 6 mm sur la voie entrant dans la déchetterie et à 4,6 mm sur la voie sortant de la déchetterie.

La profondeur d'orniérage de la planche P (couche de roulement selon l'invention) varie entre 2 et 5 mm, et est en moyenne égale à 3,2 mm sur la voie entrante et à 2,6 mm sur la voie sortante.

La profondeur d'orniérage de la planche Q varie entre 10 et 15 mm, et est en moyenne égale à 12,5 mm.

Les matériaux M1 et M2 selon l'invention (et en particulier le matériau M2) affichent donc une très bonne résistance à l'orniérage, manifestement meilleure que celle du matériau A2 préparé selon un procédé antérieur. Les matériaux selon l'invention sont aptes à supporter un trafic immédiat, intense et lourd.

Des études sont par ailleurs pratiquées pour déterminer la macrotexture superficielle des planches S, P et Q, alors âgées de 4 mois. Pour ce faire, la hauteur au sable vraie HSv est mesurée conformément à la norme NF P98-216-1 en plusieurs points desdites planches.

La hauteur au sable vraie moyenne mesurée pour la planche S selon l'invention est de 0,74 (elle est de 0,73 sur la voie entrante et de 0,75 sur la voie sortante).

La hauteur au sable vraie moyenne mesurée pour la planche P selon l'invention est de 0,61 (elle est de 0,60 sur la voie entrante et de 0,62 sur la voie sortante).

La hauteur au sable vraie moyenne mesurée pour la planche Q est de 0,98 sur la voie entrante et de 0,77 sur la voie sortante.

Bien que la norme NF P98-216-1 ne fixe aucune plage de valeurs recommandées pour la HSv, il est coutume de dire qu'une macrotexture de chaussée convenable doit conduire à une hauteur au sable vraie comprise entre 0,6 et 0,75. Les planches S et P selon l'invention (et en particulier la planche P) présentent donc une macrotexture convenable.

En revanche, une HSv supérieure à 0,75, telle que celle de la planche Q, est un signe de désordre, d'arrachage et de plumage de la couche de roulement, dus à une structure du matériau trop ouverte.

Les matériaux selon l'invention présentent donc une résistance accrue au plumage et au désenrobage comparés aux matériaux antérieurs, qui a pu être constatée visuellement

L'ensemble des tests menés a permis à l'inventeur de définir des moyens empiriques d'estimation de la qualité d'un matériau selon l'invention lorsqu'il est enrobé à froid, dont l'utilisation pourrait être généralisée à l'ensemble des matériaux mixtes. C'est ainsi que l'inventeur estime que les mesures du module élastique et, le cas échéant, de la résistance en traction indirecte pourraient constituer des indicateurs fiables pour l'appréciation des critères relatifs à la rigidité (portance, résistance à l'omiérage...), tandis que la mesure de la résistance en compression simple pourrait être valablement utilisée pour estimer la cohésion des matériaux et leur capacité à recevoir un trafic immédiat.

Et l'inventeur a déterminé, d'une part, qu'un matériau selon l'invention ayant un module élastique compris entre 6500 et 12000 MPa et une résistance en traction indirecte comprise entre 0,8 et 1,2 MPa est particulièrement approprié aux couches de structure. Il a déterminé, d'autre part, que la combinaison, pour un matériau selon l'invention, d'un module élastique compris entre 3000 et 6000 MPa, d'une résistance en traction indirecte comprise entre 0,5 et 1 MPa et d'une résistance en compression simple R comprise entre 5 et 8 MPa, qualifie un matériau particulièrement approprié aux couches de roulement. Ces plages de valeurs couvrent toutes les classes de chaussée.

Il va de soi que l'invention telle que décrite dans les revendications peut contenir de nombreuses variantes par rapport aux exemples précédemment décrits.

**Revendications**

1. Procédé de fabrication d'un matériau routier granulaire enrobé, utilisant au moins un liant organique et au moins un liant minéral, dans lequel :

   - on utilise au moins deux fractions granulaires distinctes, une première fraction, dite fraction granulaire grossière, constituée de gros et/ou moyens granulats, et une deuxième fraction, dite fraction granulaire fine, constituée de granulats fins,
   - on enrobe les granulats de la fraction granulaire grossière avec le liant organique, de façon à former une première phase, dite phase grossière organique,
   - on mélange les granulats de la fraction granulaire fine avec le liant minéral et avec une quantité d'eau d'apport, sans additif liant organique ou synthétique, de façon à former une deuxième phase, dite phase fine minérale,
   - on mélange la phase grossière organique et la phase fine minérale pour obtenir un matériau prêt à l'épandage ou au stockage.

2. Procédé selon la revendication 1, **caractérisé en ce que** la fraction granulaire grossière est enrobée à froid.

3. Procédé selon l'une des revendications 1 ou 2, **caractérisé en ce que** la fraction granulaire grossière présente une distribution granulométrique d/D, avec d compris entre 2 et 4 mm, et D compris entre 6 et 20 mm.

4. Procédé selon l'une des revendications 1 à 3, **caractérisé en ce que** la fraction granulaire fine présente une distribution granulométrique 0/d, avec d compris entre 2 et 4 mm.

5. Procédé selon l'une des revendications 1 à 4, **caractérisé en ce que** l'on utilise, à titre de liant organique, un liant choisi parmi un bitume pur, un bitume fluxé, un bitume fluidifié, une émulsion d'un bitume par, une émulsion d'un bitume fluxé, une émulsion d'un bitume fluidifié, une mousse d'un bitume pur, une mousse d'un bitume fluxé, une mousse d'un bitume fluidifié, une résine thermoplastique, une émulsion d'une résine thermoplastique, une résine thermodurcissable, une émulsion d'une résine thermodurcissable, une résine acrylique, une résine à base de monomères et/ou polymères d'éthyle vinyle acétate, une résine à base de monomères et/ou polymères de styrène butadiène styrène, une émulsion de l'une des résines précitées, un mélange de plusieurs des liants organiques précités.

6. Procédé selon la revendication 5, **caractérisé en ce que** l'on utilise une émulsion à titre de liant organique, et **en ce que** l'on attend ou l'on provoque la rupture de l'émulsion dans la phase grossière organique avant de mélanger la phase grossière organique et la phase fine minérale.

**7.** Procédé selon la revendication 6, **caractérisé en ce que** l'on utilise, à titre de liant organique, une émulsion à rupture rapide on moyenne, ayant un indice de rupture adapté pour que la rupture de l'émulsion intervienne dès l'obtention d'un mouillage, par l'émulsion, de l'ensemble des granulats de la fraction granulaire grossière.

**8.** Procédé selon la revendication 7, **caractérisé en ce qu'**on utilise une fraction granulaire grossière à base de silico-calcaire et, à titre de liant organique, une émulsion comprenant au moins un agent émulsifiant cationique et au moins un agent émulsifiant amphotère.

**9.** Procédé selon la revendication 8, **caractérisé en ce qu'**on utilise une émulsion dont les agents émulsifiants comprennent 20 à 60% d'agents cationiques et 80 à 40% d'agents amphotères.

**10.** Procédé selon la revendication 7, **caractérisé en ce qu'**on utilise une fraction granulaire grossière à caractère basique et, à titre de liant organique, une émulsion comprenant au moins un agent émulsifiant anionique et au moins un agent émulsifiant amphotère.

**11.** Procédé selon la revendication 6, **caractérisé en ce qu'**on provoque la rupture de l'émulsion au moyen d'une composition, dite composition de rupture, choisie parmi un lait de chaux, une composition à base de chaux pulvérulente vive ou éteinte, une composition à base d'un liant minéral et notamment d'un liant à base de métakaolin et de chaux.

**12.** Procédé selon l'une des revendications 1 à 11, **caractérisé en ce que** l'on utilise, à titre de liant organique, une émulsion d'un bitume mou de pénétrabilité supérieure ou égale à 60/70.

**13.** Procédé selon l'une des revendications 1 à 12 pour la réalisation d'un matériau routier pour couche de roulement, **caractérisé en ce que** l'on utilise, à titre de liant organique, un liant hydrocarboné à base de bitume, en une quantité telle que le poids de bitume résiduel après mélange de la phase grossière organique et de la phase fine minérale soit compris entre 1,5 et 4,5% du poids total d'agrégats secs.

**14.** Procédé selon l'une des revendications 1 à 12 pour la réalisation d'un matériau routier pour couche de structure, **caractérisé en ce que** l'on utilise, à titre de liant organique, un liant hydrocarboné à base de bitume, en une quantité telle que le poids de bitume résiduel après mélange de la phase grossière organique et de la phase fine minérale soit compris entre 0,5 et 2,5% du total poids d'agrégats secs.

**15.** Procédé selon l'une des revendications 1 à 14, **caractérisé en ce qu'**on effectue, préalablement à leur enrobage, un pré-mouillage à l'eau des granulats de la fraction granulaire grossière.

**16.** Procédé selon l'une des revendications 1 à 15, **caractérisé en ce qu'**on effectue, préalablement à leur enrobage, un lavage des granulats de la fraction granulaire grossière, en vue d'en évacuer les éventuelles particules fines.

**17.** Procédé selon la revendication 16, **caractérisé en ce que** les particules fines évacuées sont intégrées dans la phase fme minérale par recyclage de l'eau de lavage.

**18.** Procédé selon l'une des revendications 1 à 17, **caractérisée en ce que** l'enrobage de la fraction granulaire grossière s'effectue en plusieurs étapes : on mélange les gros granulats avec le liant organique de façon à obtenir un enrobage partiel des gros granulats, puis on ajoute les granulats moyens et l'on mélange le tout.

**19.** Procédé selon l'une des revendications 1 à 18, **caractérisé en ce que** l'on effectue, préalablement à leur enrobage, un laquage des granulats de la fraction granulaire grossière au moyen d'une composition minérale, dite composition de laquage, choisie parmi un lait de chaux, une composition à base de chaux pulvérulente vive ou éteinte, une composition à base d'un liant minéral tel qu'un liant à base de métakaolin et de chaux, utilisée en une quantité telle qu'elle comprenne un poids de matière sèche compris entre 0,5 et 2% du poids total d'agrégats secs.

**20.** Procédé selon la revendication 19, **caractérisé en ce que** l'excédent de composition de laquage est recyclé dans la phase fine minérale.

**21.** Procédé selon l'une des revendications 1 à 18, **caractérisé en ce que** l'on introduit progressivement dans la phase grossière organique en cours de formation, une composition minérale, dite composition de laquage, choisie parmi un lait de chaux, une composition à base de chaux pulvérulente vive ou éteinte, une composition à base d'un liant minéral tel qu'un liant à base de métakaolin et de chaux.

22. Procédé selon l'une des revendications 1 à 21, **caractérisé en ce que** l'on utilise, à titre de liant minéral, un liant pouzzolanique comprenant 50 à 70% en poids de métakaolin et 30 à 50% en poids de chaux.

23. Procédé selon l'une des revendications 1 à 22, **caractérisé en ce que** l'on utilise une quantité d'eau d'apport telle que la quantité d'eau résiduelle dans le mélange des phases fine minérale et grossière organique n'excède pas 2% en poids dudit mélange.

24. Procédé selon l'une des revendications 1 à 13 et 15 à 23 pour la réalisation d'un matériau routier pour couche de roulement, **caractérisé en ce que** l'on utilise une quantité de liant minéral comprise entre 2 et 5% du poids total d'agrégats secs.

25. Procédé selon l'une des revendications 1 à 12 et 14 à 23 pour la réalisation d'un matériau routier pour couche de structure, **caractérisé en ce que** l'on utilise une quantité de liant minéral comprise entre 2 et 8% du poids total d'agrégats secs.

26. Procédé selon l'une des revendications 1 à 25, **caractérisé en ce que** la fraction granulaire grossière représente 55 à 70 % du poids total des fractions granulaires fine et grossière.

27. Procédé selon l'une des revendications 1 à 26, **caractérisé en ce que** la fraction granulaire fine et le liant minéral réunis comprennent entre 6 et 15%, en poids total d'agrégats secs, d'éléments de dimension inférieure à 80 $\mu$m.

**Patentansprüche**

1. Verfahren zur Herstellung eines Straßenbau-Mischgranulats unter Verwendung von wenigstens einem organischen Bindemittel und wenigstens einem mineralischen Bindemittel, bei dem:

   - wenigstens zwei separate Granulatfraktionen verwendet werden, eine erste Fraktion, Grobgranulatfraktion genannt, die aus groben und/oder mittelgroben Körnern besteht, und eine zweite Fraktion, Feingranulatfraktion genannt, die aus feinen Körnern besteht,
   - die Körner der Grobgranulatfraktion mit dem organischen Bindemittel auf eine solche Weise überzogen wird, dass eine erste Phase, organische Grobphase genannt, entsteht,
   - das Granulat der Feingranulatfraktion mit dem mineralischen Bindemittel und mit einer Fremdwassermenge ohne organischen oder synthetischen Bindemittelzuschlag gemischt wird, um eine zweite Phase zu bilden, mineralische Feinphase genannt,
   - die organische Grobphase und die mineralische Feinphase gemischt werden, um ein Material zu erhalten, das getreut oder gelagert werden kann.

2. Verfahren nach Anspruch 1, **dadurch gekennzeichnet, dass** die Grobgranulatfraktion kalt vermischt wird.

3. Verfahren nach Anspruch 1 oder 2, **dadurch gekennzeichnet, dass** die Grobgranulatfraktion eine mittlere Korngrößenverteilung d/D hat, wobei d zwischen 2 und 4 mm und D zwischen 6 und 20 mm liegt.

4. Verfahren nach einem der Ansprüche 1 bis 3, **dadurch gekennzeichnet, dass** die Feingranulatfraktion eine mittlere Korngrößenverteilung 0/d hat, wobei d zwischen 2 und 4 mm liegt.

5. Verfahren nach einem der Ansprüche 1 bis 4, **dadurch gekennzeichnet, dass** als organisches Bindemittel ein Bindemittel verwendet wird, das aus Folgenden ausgewählt wird: reines Bitumen, Bitumen mit Fluxmittel, Kaltbitumen, eine Emulsion aus reinem Bitumen, eine Emulsion aus Bitumen mit Fluxmittel, eine Emulsion aus Kaltbitumen, ein Schaum aus reinem Bitumen, ein Schaum aus Bitumen mit Fluxmittel, ein Kaltbitumenschaum, ein thermoplastischer Harz, eine Emulsion aus thermoplastischem Harz, ein wärmehärtbarer Harz, eine Emulsion aus wärmehärtbarem Harz, ein Acrylharz, ein Harz auf der Basis von Ethylvinylacetatmonomeren und/oder -polymeren, ein Harz auf der Basis von Styrolbutadienstyrolmonomeren und/oder -polymeren, eine Emulsion aus einem der vorerwähnten Harze, ein Gemisch aus mehreren vorerwähnten organischen Bindemitteln.

6. Verfahren nach Anspruch 5, **dadurch gekennzeichnet, dass** eine Emulsion als organisches Bindemittel verwendet wird, und **dadurch**, dass das Brechen der Emulsion in der organischen Grobphase vor dem Mischen der organischen Grobphase mit der mineralischen Feinphase abgewartet oder hervorgerufen wird.

7.  Verfahren nach Anspruch 6, **dadurch gekennzeichnet, dass** als organisches Bindemittel eine schnell oder mittelschnell brechende Emulsion mit einem Brechungsindex verwendet wird, der so gewählt wird, dass das Brechen der Emulsion stattfindet, sobald eine Vernetzung, durch die Emulsion, der Gesamtheit der Körner der Grobgranulatfraktion erzielt ist.

8.  Verfahren nach Anspruch 7, **dadurch gekennzeichnet, dass** eine Grobgranulatfraktion auf Kalksandsteinbasis und als organisches Bindemittel eine Emulsion verwendet wird, die wenigstens einen kationischen Emulsionsbildner und wenigstens einen amphoterischen Emulsionsbildner umfasst.

9.  Verfahren nach Anspruch 8, **dadurch gekennzeichnet, dass** eine Emulsion verwendet wird, deren Emulsionsbildner 20 bis 60% kationische und 80 bis 40% amphoterische Bildner enthält.

10. Verfahren nach Anspruch 7, **dadurch gekennzeichnet, dass** eine Grobgranulatfraktion mit basischem Charakter und als organisches Bindemittel eine Emulsion verwendet wird, die wenigstens einen anionischen Emulsionsbildner und wenigstens einen amphoterischen Emulsionsbildner enthält.

11. Verfahren nach Anspruch 6, **dadurch gekennzeichnet, dass** das Brechen der Emulsion mit einer Zusammensetzung hervorgerufen wird, Brechzusammensetzung genannt, die aus Kalkmilch, einer Zusammensetzung auf der Basis von gebranntem oder gelöschtem Pulverkalk und einer Zusammensetzung auf der Basis eines mineralischen Bindemittels und insbesondere eines Bindemittels auf der Basis von Metakaolin und Kalk ausgewählt wird.

12. Verfahren nach einem der Ansprüche 1 bis 11, **dadurch gekennzeichnet, dass** als organisches Bindemittel eine Emulsion aus einem Asphaltteer mit einer Durchlässigkeit von gleich oder größer als 60/70 verwendet wird.

13. Verfahren nach einem der Ansprüche 1 bis 12 zur Herstellung eines Straßenbaumaterials als Deckschicht, **dadurch gekennzeichnet, dass** als organisches Bindemittel ein bituminöses Bindemittel in einer solchen Menge verwendet wird, dass das Bitumenrestgewicht nach dem Mischen der organischen Grobphase und der mineralischen Feinphase 1,5 bis 4,5% des Gesamtgewichtes des Trockenzuschlags beträgt.

14. Verfahren nach einem der Ansprüche 1 bis 12 zur Herstellung eines Straßenbaumaterials für eine Strukturschicht, **dadurch gekennzeichnet, dass** als organisches Bindemittel ein bituminöses Bindemittel in einer solchen Menge verwendet wird, dass das Bitumenrestgewicht nach dem Mischen der organischen Grobphase und der mineralischen Feinphase 0,5 bis 2,5% des Gesamtgewichts des Trockenzuschlags beträgt.

15. Verfahren nach einem der Ansprüche 1 bis 14, **dadurch gekennzeichnet, dass** vor dem Überziehen eine Vorbenetzung von Körnern der Grobgranulatfraktion mit Wasser erfolgt.

16. Verfahren nach einem der Ansprüche 1 bis 15, **dadurch gekennzeichnet, dass** die Körner der Grobgranulatfraktion vor dem Überziehen gewaschen werden, um eventuelle Feinpartikel daraus zu beseitigen.

17. Verfahren nach Anspruch 16, **dadurch gekennzeichnet, dass** die beseitigten Feinpartikel durch Recyclierung des Waschwassers in der mineralischen Feinphase integriert werden.

18. Verfahren nach einem der Ansprüche 1 bis 17, **dadurch gekennzeichnet, dass** das Überziehen der Grobgranulatfraktion in mehreren Stufen erfolgt: die groben Körner werden mit dem organischen Bindemittel so gemischt, dass eine Teilüberziehung der groben Körner erzielt wird, dann werden mittelgroße Körner zugegeben und das Ganze wird vermischt.

19. Verfahren nach einem der Ansprüche 1 bis 18, **dadurch gekennzeichnet, dass** die Körner der Grobgranulatfraktion vor ihrem Überziehen mit einer mineralischen Zusammensetzung, Lackzusammensetzung genannt, lackiert werden, die aus Folgenden ausgewählt wird: Kalkmilch, eine Zusammensetzung auf der Basis von gebranntem oder gelöschtem Pulverkalk, eine Zusammensetzung auf der Basis eines mineralischen Bindemittels wie z.B. eines Bindemittels auf der Basis von Metakaolin und Kalk, verwendet in einer solchen Menge, dass sie ein Gewicht der Trockenmasse zwischen 0,5 und 2% des Gesamtgewichts des Trockenzuschlags ausmacht.

**20.** Verfahren nach Anspruch 19, **dadurch gekennzeichnet, dass** der Lackzusammensetzungsüberschuss in der mineralischen Feinphase recycliert wird.

**21.** Verfahren nach einem der Ansprüche 1 bis 18, **dadurch gekennzeichnet, dass** fortschreitend in der organischen Grobphase im Laufe der Bildung eine mineralische Zusammensetzung, Lackzusammensetzung genannt, zugegeben wird, die aus Kalkmilch, einer Zusammensetzung auf der Basis von gebranntem oder gelöschtem Pulverkalk, einer Zusammensetzung auf der Basis eines mineralischen Bindemittels wie z.B. einem Bindemittel auf der Basis von Metakaolin und Kalk ausgewählt wird.

**22.** Verfahren nach einem der Ansprüche 1 bis 21, **dadurch gekennzeichnet, dass** als mineralisches Bindemittel ein puzzolanisches Bindemittel verwendet wird, das 50 bis 70 Gew.-% Metakaolin und 30 bis 50 Gew.-% Kalk enthält.

**23.** Verfahren nach einem der Ansprüche 1 bis 22, **dadurch gekennzeichnet, dass** eine solche Menge an Fremdwasser verwendet wird, das die Menge an Restwasser in dem Gemisch aus mineralischen Feinphasen und organischen Grobphasen 2 Gew.-% des genannten Gemischs nicht überschreitet.

**24.** Verfahren nach einem der Ansprüche 1 bis 13 und 15 bis 23 zur Herstellung eines Straßenbaumaterials als Deckschicht, **dadurch gekennzeichnet, dass** eine Menge des mineralischen Bindemittels verwendet wird, die zwischen 2 und 5% des Gesamtgewichts des Trockenzuschlags ausmacht.

**25.** Verfahren nach einem der Ansprüche 1 bis 12 und 14 bis 23 zur Herstellung eines Straßenbaumaterials als Strukturschicht, **dadurch gekennzeichnet, dass** eine Menge des mineralischen Bindemittels verwendet wird, die zwischen 2 und 8% des Gesamtgewichts des Trockenzuschlags ausmacht.

**26.** Verfahren nach einem der Ansprüche 1 bis 25, **dadurch gekennzeichnet, dass** die Grobgranulatfraktion 55 bis 70% des Gesamtgewichts der Fein- und Grobgranulatfraktionen ausmacht.

**27.** Verfahren nach einem der Ansprüche 1 bis 26, **dadurch gekennzeichnet, dass** die Feingranulatfraktion mit dem vereinigten mineralischen Bindemittel zwischen 6 und 15% des Gesamtgewichts des Trockenzuschlags von Elementen mit einer Größe unter 80 $\mu$m umfassen.

**Claims**

**1.** A process for producing a coated granular road material, using at least one organic binder and at least one inorganic binder, wherein:

- at least two distinct granular fractions are used, a first fraction, called a coarse granular fraction, consisting of coarse and/or medium aggregates, and a second fraction, called a fine granular fraction, consisting of fine aggregates,
- the aggregates of the coarse granular fraction are coated with the organic binder so as to form a first phase, called the organic coarse phase,
- the aggregates of the fine granular fraction are mixed with the inorganic binder and with a quantity of makeup water, without an organic or synthetic additive, so as to form a second phase, called the inorganic fine phase,
- the organic coarse phase and the inorganic fine phase are mixed so as to obtain a material that is ready to be spread or stored.

**2.** The process according to claim 1, **characterized in that** the coarse granular fraction is coated cold.

**3.** The process according to either of claims 1 or 2, **characterized in that** the coarse granular fraction has a particle size distribution d/D, with d comprised between 2 and 4 mm and D comprised between 6 and 20 mm.

**4.** The process according to one of claims 1 to 3, **characterized in that** the fine granular fraction has a particle size distribution 0/d, with d comprised between 2 and 4 mm.

**5.** The process according to one of claims 1 to 4, **characterized in that** use is made, as an organic binder, of a binder chosen from pure bitumen, fluxed bitumen, cutback bitumen, an emulsion of pure bitumen, an emulsion of a fluxed bitumen, an emulsion of a cutback bitumen, a pure bitumen foam, a fluxed bitumen foam, a cutback bitumen foam, a thermoplastic resin, a thermoplastic resin emulsion, a thermosetting resin, a thermosetting resin emulsion, an acrylic resin, a resin based on monomers and/or polymers of ethyl vinyl acetate, a resin based on monomers and/or polymers of styrene butadiene styrene, an emulsion of one of the aforementioned resins, or a mixture of several of the aforementioned organic binders.

6.  The process according to claim 5, **characterized in that** an emulsion is used as the organic binder and breaking of the emulsion in the organic coarse phase is waited for or brought about before the organic coarse phase and the inorganic fine phase are mixed.

7.  The process according to claim 6, **characterized in that** a fast- or medium-break emulsion is used as the organic binder, having a break index adapted so that the emulsion breaks as soon as all the aggregates of the coarse granular fraction are wetted by the emulsion.

8.  The process according to claim 7, **characterized in that** a coarse granular fraction is used with a silico-calcic base and, as an organic binder, an emulsion containing at least one cationic emulsifying agent and at least one amphoteric emulsifying agent.

9.  The process according to claim 8, **characterized in that** an emulsion is used of which the emulsifying agents comprise 20 to 60 % cationic agents and 80 to 40 % amphoteric agents.

10. The process according to claim 7, **characterized in that** a coarse granular fraction is used with a basic character and, as an organic binder, an emulsion containing at least one anionic emulsifying agent and at least one amphoteric emulsifying agent.

11. The process according to claim 6, **characterized in that** breaking of the emulsion is brought about by means of a composition, called the breaking composition, chosen from lime water, a composition based on powdered quick or slaked lime, a composition based on an inorganic binder and in particular a binder based on metakaolin and lime.

12. The process according to one of claims 1 to 11, **characterized in that** use is made, as an organic binder, of an emulsion of a soft bitumen with a penetrability greater than or equal to 60/70.

13. The process according to one of claims 1 to 12 for producing a road material for a surface course, **characterized in that** use is made, as an organic binder of a hydrocarbon binder based on bitumen, in a quantity such that the weight of residual bitumen after mixing the organic coarse phase with the inorganic fine phase, lies between 1.5 and 4.5 % of the total weight of dry aggregates.

14. The process according to one of claims 1 to 12 for producing a road material for a structural course, **characterized in that** use is made, as an organic binder, of a hydrocarbon binder based on bitumen, in a quantity such that the weight of residual bitumen after mixing the organic coarse phase with the inorganic fine phase, lies between 0.5 and 2.5 % of the total weight of dry aggregates.

15. The process according to one of claims 1 to 14, **characterized in that** the aggregates of the coarse granular fraction are pre-wetted with water before they are coated.

16. The process according to one of claims 1 to 15, **characterized in that** the aggregates of the coarse granular fraction are washed, before they are coated, with a view to removing any fine particles.

17. The process according to claim 16, **characterized in that** the fine particles removed are incorporated into the inorganic fine phase by recycling the wash water.

18. The process according to one of claims 1 to 17, **characterized in that** the coarse granular fraction is coated in several steps: the coarse aggregates are mixed with the organic binder so as to obtain partial coating of the coarse aggregates, the medium aggregates are then added and everything is mixed.

19. The process according to one of claims 1 to 18, **characterized in that** the aggregates of the coarse granular fraction are lacquered, before being coated, with an inorganic composition, called the lacquering composition, chosen from lime water, a composition based on powdered quick or slaked lime, a composition based on an inorganic binder such as a binder based on metakaolin and lime, used in a quantity such that it comprises a weight of dry matter between 0.5 and 2 % of the total weight of dry aggregates.

20. The process according to claim 19, **characterized in that** the excess lacquering composition is recycled in the inorganic fine phase.

21. The process according to one of claims 1 to 18, **characterized in that** there is introduced progressively into the organic coarse phase as it forms, an inorganic composition, called a lacquering composition, chosen from lime water, a composition based on powdered quick or slaked lime, a composition based on an inorganic binder such as a binder based on metakaolin and lime.

22. The process according to one of claims 1 to 21, **characterized in that** use is made, as an inorganic binder, of a pozzolan binder comprising 50 to 70% by weight of metakaolin and 30 to 50% by weight of lime.

23. The process according to one of claims 1 to 22, **characterized in that** a quantity of makeup water is used such that the quantity of residual water in the mixture of inorganic fine and organic coarse phase does not exceed 2 % by weight of said mixture.

24. The process according to one of claims 1 to 13 and 15 to 23 for producing a road material for a surface course, **characterized in that** a quantity of inorganic binder is used of between 2 and 5 % of the total weight of dry aggregates.

25. The process according to one of claims 1 to 12 and 14 to 23 for producing a road material for a structural course, **characterized in that** a quantity of inorganic binder is used of between 2 and 8 % of the total weight of dry aggregates.

26. The process according to one of claims 1 to 25, **characterized in that** the coarse granular fraction represents 55 to 70 % of the total weight of fine and coarse granular fractions.

27. The process according to one of claims 1 to 26, **characterized in that** the fine granular fraction and the inorganic binder together comprise between 6 and 15 % of elements with a size less than 80 $\mu$m, on the total weight of dry aggregates.